# EUROPEAN PATENT APPLICATION

(11) **EP 2 039 954 A2**
(43) Date of publication of application: **25.03.2009**
(21) Application number: 08164536.8
(22) Date of filing: 17.09.2008
(51) Int. Cl.: F16F 1/32, F16F 15/06

(54) **Cupped spring washer clamping systems**

(30) Priority: 19.09.2007 US 858028
(71) Applicant: Honeywell International Inc., Morristown, NJ 07962 (US)
(72) Inventor: Braman, Todd L., New Brighton, MN 55112 (US); Hagenson, Dale J., Wyoming, MN 55092 (US); Grossman, Owen D., Golden Valley, MN 55422 (US)
(74) Representative: Buckley, Guy Julian

(57) **Abstract**

Systems and methods for protecting a hardware device from shock loads in a package are disclosed. An example system includes a cover (42) with an orifice at a first end and a closed second end, a cupped spring washer (20) in the cover (42) at the closed second end, a hardware package (52) in the cover (42) on the washer (20), and a base (54) that, when attached to the cover (42), loads the washer (20) and hardware package (52) with a desired load.

## Description

### BACKGROUND OF THE INVENTION

As the market demands smaller and smaller devices, new methods of assembling parts within packages to maximize the use of volume must be determined. Typically package sizes include the required parts plus the supports and fasteners required to meet the design requirements. As devices are being designed to withstand high g environments, such as a gun launch, supporting the internal hardware becomes more and more critical and requires more advanced supports. Some devices, such as navigation systems, must withstand high g requirements while taking up less space.

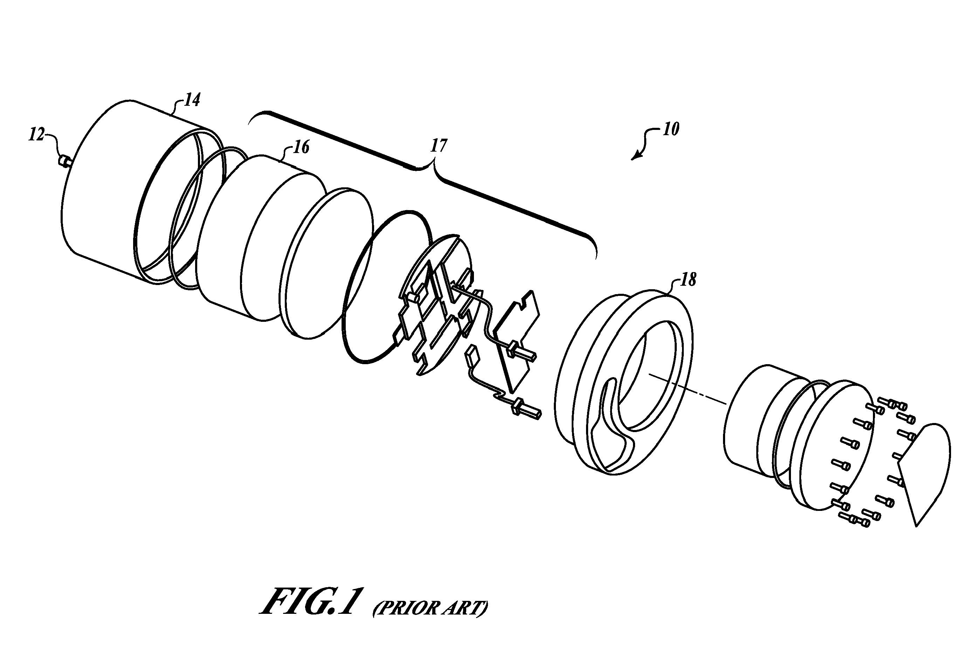

FIGURE 1 is an exploded view of a portion of a prior art system. Typically, threaded fasteners, ranging from a single large-diameter threaded member (FIG. 1) to multiple #2 or #4 threaded fasteners, attach a cover to an assembly to provide -1200 lbs of clamping load to the assembly. Additionally, the threaded fasteners have an effective spring constant approaching infinity, and so undesirably transmit high frequency vibration to the assembly. Thus, bulky external shock resistant devices are used, thereby increasing the size of the entire package.

### SUMMARY OF THE INVENTION

The present invention provides systems and methods for protecting a hardware device from shock loads in a package. An embodiment of a system of the present invention uses a cupped spring washer (or Belleville washer) to apply required clamping loads to internal hardware of a package to meet high g environments while minimizing a total size of the package. Embodiments also apply proper clamping loads over a large range of deflection of the internal hardware without placing tolerancing constraints on the overall external package size. The benefits of embodiments of the system can include: 1) no additional printed wiring board area (except for the mounting surface); 2) adequate clamping over a large range of deflection and tolerance (self-adjusts); 3) no significant loss of clamping load due to temperature, time, or other environments; 4) high frequency shock attenuation; 5) very low cost and high reliability compared to threaded fasteners; 6) extremely gun hard friendly while maintaining clamping load before, during, and after gun launch.

Embodiments of the system provides adequate clamping load over a large range of deflection and require only minimal amounts of volume. Embodiments require no additional volume since the system self-adjusts for minimum and maximum material conditions. Also, since embodiments of the invention are truly springs, the supported hardware is more isolated from high frequency shock typically associated with set-forward pulse in high-g launch environments than with threaded fasteners.

### BRIEF DESCRIPTION OF THE DRAWINGS

Preferred and alternative embodiments of the present invention are described in detail below with reference to the following drawings:

FIGURE 1 is an exploded view of a system according to the prior art;

FIGURE 2A is a side cross-sectional view of an unloaded cupped spring washer according to an embodiment of the present invention;

FIGURE 2B is a side cross-sectional view of the cupped spring washer of FIGURE 2A with a load applied to the washer;

FIGURE 2C is a perspective view of two embodiments of a cupped spring washer;

FIGURES 2D and 2E show multiple cupped spring washers placed end-to-end and stacked, respectively;

FIGURE 3A is an exploded view of an embodiment of a system according to the present invention; and

FIGURE 3B is a side cross-section of the embodiment of FIGURE 3A.

### DETAILED DESCRIPTION OF THE PREFERRED EMBODIMENT

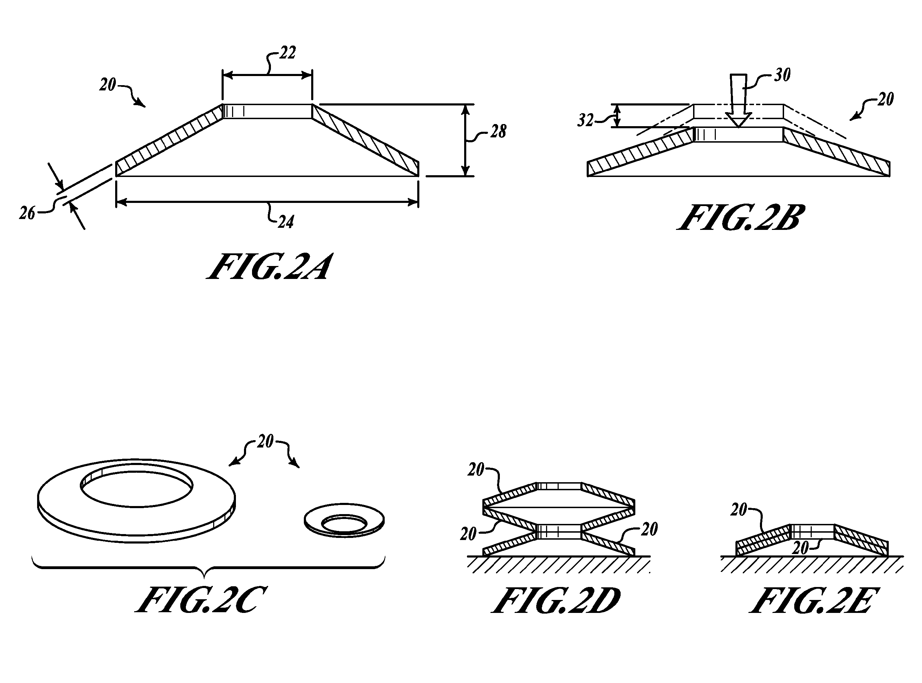

An embodiment of a cupped spring (or Belleville) washer 20 is shown in FIGURES 2A, 2B, and 2C. The washer 20 includes an inner diameter 22 and an outer diameter 24, a thickness 26, and an unloaded height 28. There is a wide range of materials from which to make the washer, including stainless steel, composites, and various other materials known to those having ordinary skill in the art. The dimensions of the washer 20 as well as the material used to make the washer are determined by an intended use of the washer and a desired spring constant, including an expected maximum load 30 and a maximum deflection 32. Note that the washer 20 can include more than one washer 20, and the washers 20 can be placed end-to-end as shown in FIGURE 2D or stacked as shown in FIGURE 2E.

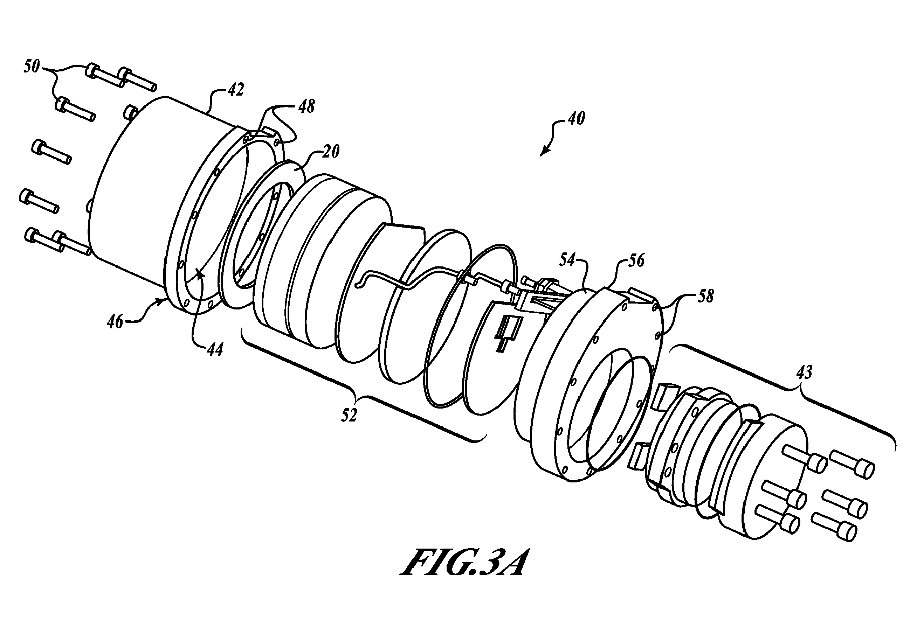

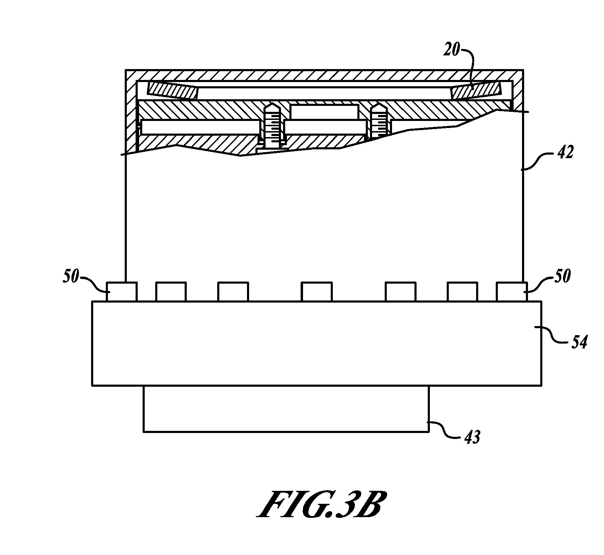

FIGURES 3A and 3B are an exploded view and a cross-sectional view, respectively, of an example system 40. The system 40 includes a cylindrical cover 42 with one orifice 44 with a perimeter flange 46 including holes 48, which can be threaded, for fasteners 50. The cupped spring washer 20 is first inserted into the cover 42, and hardware 52 is inserted into the cover 42 on top of the washer 20. The washer 20 may be inserted such that the outer diameter 24 of the washer 20 contacts the cover 42, or such that the inner diameter 22 contacts the cover 42. Note that any combination of hardware 52 may be used, depending on the intended use of the system 40. Hardware 52 can include microelectromechanical systems (MEMS) devices such as accelerometers and gyroscopes, as well as circuitry; any piece of equipment that benefits from shock isolation may be included in hardware 52.

A base 54 including a flange 56 with holes 58, which can be threaded, for fasteners 50 is then attached to the cover 42 via fasteners 50, which can be screws, through the respective holes 48, 58. The cover 42, depending on the intended use of the device 40, can include an attached external assembly 43. When fastened to the cover 42, the base 54 contacts the hardware 52 and applies a force to the hardware 52. The hardware 52, in turn, applies a force to and compresses the washer 20 against the base 54, thereby loading the washer 20 with a predetermined load. In this way, the washer 20 can provide a required load to the hardware 52 over a range of deflections of the washer 20 and tolerances of the hardware 52. The washer 20 can also reduce the amount of vibration transmitted to the hardware 52 from the washer 20 as compared to the prior art. The cover 42 and base 54 can apply a wide range of loads to the washer 20, ranging from small to the maximum strength of the materials. Depending on the application and the design of the washer 20, any load and load range a system could require, from very small load ranges (grams) to very large load ranges (many tons), can be provided.

Embodiments of the present invention provide -1300 lbs of clamping load at a minimum material condition (∼0.020" deflection) and ∼2600 lbs of clamping load at a maximum material condition (∼0.080" deflection).

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

## Claims

1. A device comprising:
a cover (42) including an orifice at a first end of the cover (42) and a closed second end;
a hardware package (52) insertable into the cover (42);
a cupped spring washer (20), the washer (20) including an inner and an outer diameter, an unloaded height, a thickness, and a spring constant, the washer (20) located in the cover (42) between the second end and the hardware package (52); and
a base (54) attachable to the cover (42), the base (54) configured to contact and apply a desired load to the hardware package (52) and the washer (20).

2. The device of Claim 1, wherein the cover (42) and base (54) are cylindrical.

3. The device of Claim 1, wherein the cover (42) further includes a perimeter flange (46), and the perimeter flange (46) includes at least one aperture, and the base (54) further includes a base flange (56), the base flange (56) includes at least one aperture;
wherein the base (54) is attachable to the cover (42) by aligning and inserting a fastener though the at least one aperture of the perimeter flange (46) and the at least one aperture of the base flange (56).

4. The device of Claim 1, wherein the cupped spring washer (20) is made of steel.

5. The device of Claim 1, wherein the cupped spring washer (20) is a Belleville washer.

6. The device of Claim 1, wherein the cupped spring washer (20) includes more than one cupped spring washer (20).

7. The device of Claim 6, wherein the more than one cupped spring washer (20) is one of stacked or end to end.

8. A method for protecting a hardware device in a package, comprising:
applying a preload between a hardware device, a cupped spring washer (20), and a bottom of one end of the package, using a base (54)of the package that is attached to a cover (42) of the package;
reducing a shock applied to the hardware device by further loading the washer (20).

9. The method of Claim 8, wherein the cupped spring washer (20) includes more than one cupped spring washer (20).

10. The method of Claim 8, wherein the cupped spring washer (20) is a Belleville washer.
